# NEUE EUROPÄISCHE PATENTSCHRIFT

(11) **EP 2 346 643 B2**
(45) Veröffentlichungstag und Bekanntmachung des Hinweises auf die Entscheidung über den Einspruch: **28.09.2022**
(45) Hinweis auf die Patenterteilung: 19.04.2017
(21) Anmeldenummer: 09751879.9
(22) Anmeldetag: 03.11.2009
(51) Int. Cl.: B23P 19/06, B25B 29/02

(54) **SCHRAUBENSPANNVORRICHTUNG**
SCREW TENSIONING DEVICE
DISPOSITIF DE SERRAGE POUR VIS

(30) Priorität: 14.11.2008 DE 202008015148 U
(43) Veröffentlichungstag der Anmeldung: 27.07.2011
(73) Patentinhaber: Wagner Vermögensverwaltungs-GmbH & Co. KG, 53804 Much (DE)
(72) Erfinder: WAGNER, P., H., 53804 Much-Birrenbachshöhe (DE); THELEN, Bernd, 53804 Much (DE)
(74) Vertreter: dompatent von Kreisler Selting Werner - Partnerschaft von Patent- und Rechtsanwälten mbB
(86) Internationale Anmeldenummer: PCT/EP2009/064545
(87) Internationale Veröffentlichungsnummer: WO 2010/054959

(56) Entgegenhaltungen:
- WO-A1-2006/027060
- DE-A1- 3 047 674
- DE-A1-102005 015 922
- DE-U1- 9 316 464
- GB-A- 2 272 741
- US-A- 3 679 173

## Beschreibung

Die Erfindung betrifft eine Schraubenspannvorrichtung zum Dehnen eines eine Mutter tragenden Gewindebolzens, mit einem Stützrohr und einem in axialer Verlängerung des Stützrohres vorgesehenen Zylinderteil, welcher einen axial bewegbaren Kolbenteil enthält, und einem durch den Kolbenteil verlaufenden Zugbolzen, der mit dem Kolben zur axialen Mitnahme in Eingriff steht.

Bekannt sind Schraubenspannvorrichtungen zum Anziehen und Lösen von hochbelasteten Schraubverbindungen. Eine Schraubenspannvorrichtung hat die Aufgabe, eine genau vorgegebene Vorspannkraft auf die Schraubverbindung aufzubringen, um die auf einen Gewindebolzen aufgeschraubte Mutter der Schraubverbindung anziehen oder lösen zu können. Hierzu wird die Schraubenspannvorrichtung auf das über die Mutter hinaus vorstehende Gewinde des Gewindebolzens aufgeschraubt und anschließend unter hydraulischen Druck gesetzt. Die Einschraubtiefe des Gewindebolzens in den Zugbolzen muss mindestens eine Länge von 1 x D haben, wobei D der Durchmesser des Gewindebolzens ist, damit sichergestellt wird, dass durch das Spannen der Gewindebolzen nicht beschädigt wird. Wenn ein Bolzenüberstand von 1 x D nicht eingehalten wird, besteht die Gefahr des Abreißens der Schraubenspannvorrichtung mit der Folge der Gefährdung von Personen und Sachen.

In DE 10 2005 015 922 B4 ist eine Schraubenspannvorrichtung beschrieben, die einen Messstab enthält, welcher die relative Verschiebung des Gewindeende des Gewindebolzens gegenüber dem Hydraulikzylinder bzw. -gehäuse der Schraubenspannvorrichtung misst. Damit erhält man lediglich ein Maß für die jeweilige Dehnung des Gewindebolzens, jedoch keine Informationen darüber, ob der Zugbolzen hinreichend weit auf den Gewindebolzen aufgeschraubt ist. GB 2 272 741 A und DE 30 47 674 A1 offenbaren ähnliche Vorrichtungen, die die Dehnung des Gewindebolzens mittels einer Messuhr ermitteln.

Der Erfindung liegt die Aufgabe zugrunde, eine Schraubenspannvorrichtung zu schaffen, bei der die Einschraubtiefe auf einfache Weise sichtbar gemacht wird, so dass zur Kontrolle des Mindestbolzenüberstands keine zusätzlichen Werkzeuge oder Arbeitsschritte notwendig werden.

Die erfindungsgemäße Schraubenspannvorrichtung ist durch den Anspruch 1 definiert.

WO 2006/027060 A1 offenbart eine Schraubenspannvorrichtung, die den Schraubenüberstand gegenüber dem Gehäuse bzw. dem Überstand des Gewindebolzens über die Mutter messen lässt.

DE 93 16 464 U1 offenbart eine Schraubenspannvorrichtung nach dem Oberbegriff von Anspruch 1.

Die Erfindung ermöglicht es, ohne zusätzliche Maßnahmen an der Schraubenspannvorrichtung zu erkennen, ob der erforderliche Bolzenüberstand eingehalten ist. Dadurch wird die Handhabung der Schraubenspannvorrichtung vereinfacht und der Zeitaufwand für ein ordnungsgemäßes Anziehen oder Lösen der Schraubverbindung wird verringert. Die innenliegende Tiefenmesseinrichtung ist so gekapselt, dass sie frei von äußeren Einwirkungen ist, die Beschädigungen hervorrufen könnten oder die Funktionsfähigkeit beeinträchtigen könnten. Beim Vorgang des Aufschraubens der hydraulischen Spannvorrichtung wird automatisch der Gewindeüberstand gemessen bzw. geprüft und optisch angezeigt.

Gemäß einer bevorzugten Ausführungsform der Erfindung ist vorgesehen, dass der Zugbolzen eine axiale Gewindebohrung zum Einschrauben des Gewindebolzens aufweist, und dass die Gewindebohrung an einem stirnseitigen Rand des Zugbolzens endet. Das untere Ende der Gewindebohrung hat die Funktion einer Referenzposition, welche die Basis bildet, von der aus die Einschraubtiefe des Gewindebolzens gemessen wird.

Die Tiefenmesseinrichtung weist vorzugsweise einen Messstab auf, der in einem Kanal des Zugbolzens axial bewegbar ist und an einem Ende einen Anschlag und am anderen Ende eine Markierung aufweist, die aus einem Gehäuse der Schraubenspannvorrichtung heraus vorstehen kann. Der Messstab kann aus dem Gehäuse der Schraubenspannvorrichtung heraus vorstehen. An diesem Ende des Messstabes befindet sich die Markierung, beispielsweise ein grünes Feld. Wenn die Markierung von außen sichtbar ist, wird ein ordnungsgemäßer Bolzenüberstand angezeigt. Ist die Gutmarkierung dagegen nicht sichtbar, ist der Überstand zu gering. Es ist auch möglich, dass der Messstab eine Schlechtmarkierung aufweist, beispielsweise von roter Farbe, deren Sichtbarkeit angibt, dass der Überstand unzureichend ist.

Gemäß einer bevorzugten Ausgestaltung der Erfindung ist vorgesehen, dass der Zugbolzen eine Feder enthält, die den Messstab in Richtung auf das zweite Ende spannt. Durch die Feder wird der Messstab in Richtung auf den Gewindebolzen und in fester Anlage an die Stirnfläche des Gewindebolzens gedrückt.

Im Folgenden wird unter Bezugnahme auf die Zeichnungen ein Ausführungsbeispiel der Erfindung näher erläutert.

Es zeigen:

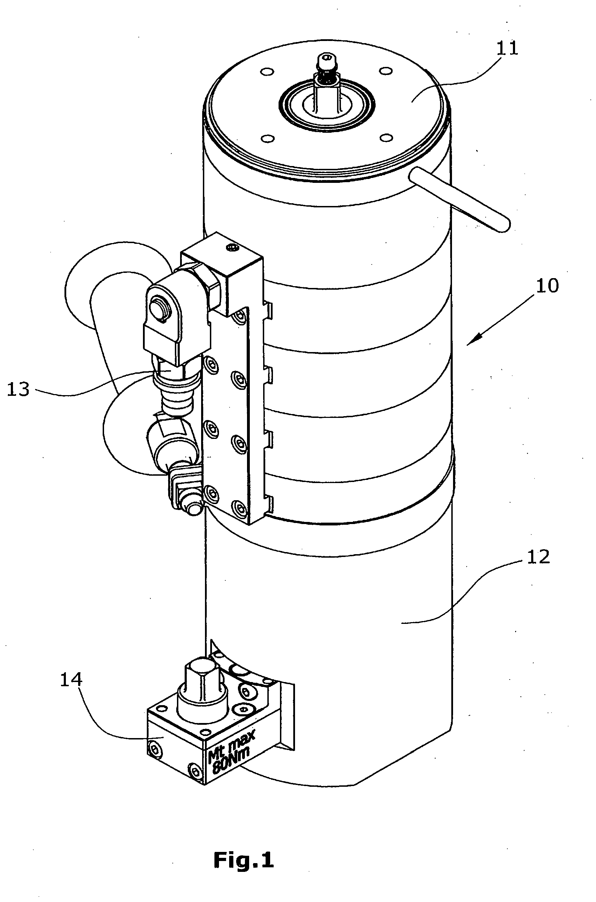

- Figur 1: eine Ansicht der Schraubenspannvorrichtung und
- Figur 2: einen Längsschnitt durch die Schraubenspannvorrichtung.

Die dargestellte hydraulische Schraubenspannvorrichtung weist ein Gehäuse 10 auf, das generell zylindrisch ausgebildet ist und eine obere Stirnwand 11 hat, während das untere Ende durch ein Stützrohr 12 gebildet ist, das an der Unterseite offen ist. Seitlich an dem Gehäuse 10 befindet sich ein Hydraulikanschluss 13. Außerdem ist ein Getriebe 14 vorgesehen, das mit einem Werkzeug gedreht werden kann, um die auf dem Gewindebolzen sitzende Mutter zu drehen.

Das Gehäuse 10 enthält oberhalb des Stützrohrs 12 einen Zylinderteil 15 mit mehreren Hydraulikzylindern 16, die sämtlich hydraulisch parallel geschaltet sind und mit dem Hydraulikanschluss 13 verbunden sind. Ein axial bewegbarer Kolbenteil 17 enthält die in den Zylindern 16 bewegbaren Kolben 18. Der Kolbenteil 17 ist mit einer Federvorrichtung 19 an der oberen Stirnwand 11 abgestützt. Die Federvorrichtung 19 treibt die Kolben 18 in die untere Endstellung. Durch hydraulischen Druck in den Zylindern 16 werden die Kolben 18 entgegen der Wirkung der Feder 19 hochgedrückt.

Der Kolbenteil 17 ist ringförmig. Durch ihn erstreckt sich koaxial ein Zugbolzen 20, der einen Schaftteil 21 und einen Kopplungsteil 22 aufweist. Der Kopplungsteil 22 befindet sich innerhalb des Stützrohres 12 und er enthält eine axiale Gewindebohrung 23, die an einer Stirnfläche endet.

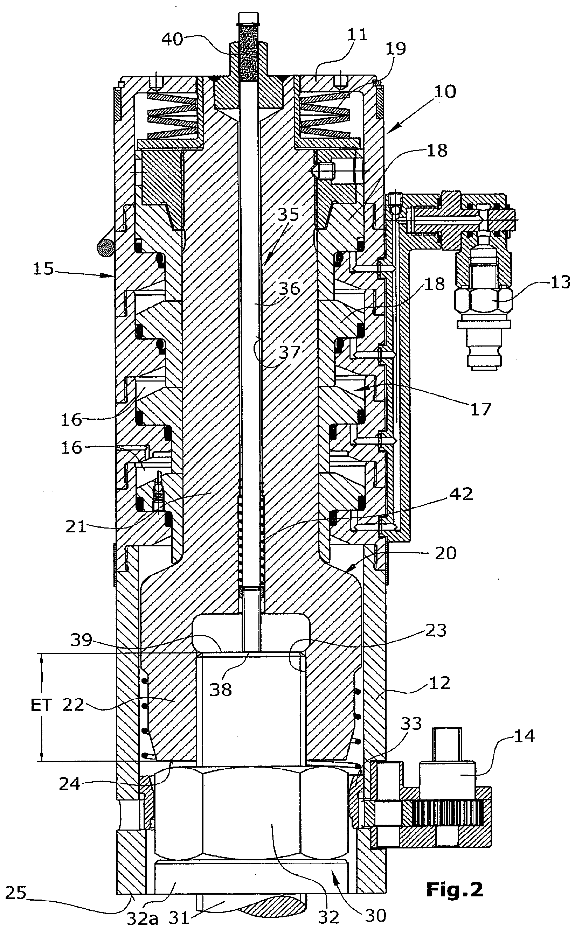

In Figur 2 ist ferner die Schraubverbindung 30 dargestellt. Diese besteht aus einem Gewindebolzen 31, der ein Außengewinde aufweist, und einer auf das Außengewinde aufgeschraubten Mutter 32, die mit einer Unterlegscheibe 32a unterlegt ist. Der Gewindebolzen 31 ist Bestandteil eines Werkstücks, an dem das Stützrohr 12 mit seiner Stirnfläche 25 abgestützt wird. Die hydraulische Spannvorrichtung dient dazu, den Gewindebolzen 31 axial zu dehnen, um die Mutter 32 ohne größeren Widerstand drehen zu können. Dieses Drehen kann durch das Getriebe 14 erfolgen oder durch manuelles Angreifen an der Mutter durch Schlitze des Stützrohrs 12. Am Stützrohr befindet sich ein Schlüsselring 33, dessen Innenkontur der Sechskantkontur der Mutter 32 angepasst ist, und der von dem Getriebe 14 gedreht werden kann. Der Schlüsselring 33 ist relativ zu dem Stützrohr 12 drehbar. Auf diese Weise kann die Mutter 32 gedreht werden, während der Gewindebolzen 31 fest steht.

Für den Spannvorgang ist es wichtig, dass eine bestimmte Mindest-Einschraubtiefe des Gewindebolzens 31 in die Gewindebohrung 23 eingehalten wird. Diese Einschraubtiefe ET muss in der Regel mindestens gleich D sein, wobei D der Gewindedurchmesser des Gewindebolzens ist. Zur Messung der Einschraubtiefe ET ist eine Tiefenmesseinrichtung 35 vorgesehen. Diese weist einen Messstab 36 auf, der durch einen axialen Kanal 37 des Schaftteils 21 hindurchgeht. Der Messstab 36 ragt bis in die Gewindebohrung 23 hinein. Sein Ende bildet einen Anschlag 38, der gegen das Ende 39 des Gewindebolzens 31 stößt. Das entgegengesetzte Ende trägt eine Markierung 40, beispielsweise eine Farbmarkierung, die aus der Stirnwand 11 des Gehäuses heraus bewegt werden kann und dann von außen sichtbar ist.

Im Inneren des Zugbolzens 20 befindet sich eine Feder 42, die mit einem Ende an dem Zugbolzen abgestützt ist, und deren anderes Ende an dem Messstab 36 angreift und diesen in Richtung auf den Gewindebolzen 31 drückt.

Bei Benutzung der Schraubenspannvorrichtung wird zunächst die Mutter 32 locker auf den Gewindebolzen 31 aufgeschraubt. Dann wird die Schraubenspannvorrichtung auf die Schraubverbindung 30 aufgesetzt und um ihre Achse gedreht, so dass der Zugbolzen 20 auf den Gewindeteil des Gewindebolzens 31 aufgeschraubt wird. Durch die Tiefenmesseinrichtung 35 wird festgestellt, ob der Überstand U des Gewindebolzens über die Mutter 32 ausreichend groß ist, um die Markierung 40 aus dem Gehäuse herauszudrücken. Die Tiefenmesseinrichtung 35 ist in der Schraubenspannvorrichtung gekapselt und somit geschützt untergebracht, so dass sie keinen äußeren Einwirkungen ausgesetzt ist. Bei dem Vorgang des Aufschraubens der Schraubenspannvorrichtung auf den Gewindebolzen 31 wird der Messstab 36 gegen den Druck der Feder 42 nach oben gedrückt, wodurch die Markierung 40, die im unbenutzten Zustand in dem Gehäuse versenkt ist, nach außen bewegt und somit sichtbar wird. Der Anwender erhält damit eine Information, dass der Überstand des Gewindebolzens 31 über die Mutter 32 ausreichend ist, so dass die Druckbeaufschlagung des Zylinderteils 15 erfolgen kann.

Die Markierung 40 liefert bei der vorliegenden Erfindung ein optisches Signal. Alternativ oder zusätzlich kann gemäß der Erfindung ein akustisches Gutsignal erzeugt werden, wenn der Messstab 36 sich im Gutbereich befindet. Der Benutzer braucht dann nicht sein Augenmerk auf die Spannvorrichtung zu richten.

## Patentansprüche

1. Schraubenspannvorrichtung zum Dehnen eines eine Mutter (32) tragenden Gewindebolzens (31), mit einem Stützrohr (12) und einem in axialer Verlängerung des Stützrohrs (12) vorgesehenen Zylinderteil (15), welcher einen axial bewegbaren Kolbenteil (17) umgibt, und einem durch den Kolbenteil (17) verlaufenden Zugbolzen (20), der mit dem Kolbenteil zur axialen Mitnahme in Eingriff steht, wobei der Zugbolzen (20) einen axialen Kanal (37) aufweist, welcher eine Tiefenmesseinrichtung (35) zur Anzeige der axialen Position des Endes (39) des Gewindebolzens (31) in Bezug auf den Zugbolzen (20) aufweist,
**dadurch gekennzeichnet, dass**
mittels der Tiefenmesseinrichtung (35) beim Vorgang des Aufschraubens der Schraubenspannvorrichtung automatisch die Einschraubtiefe (ET) des Gewindebolzens (31) messbar ist und die Tiefenmesseinrichtung ein optisches und/oder akustisches Signal liefert, wenn die Einschraubtiefe (ET) des Gewindebolzens (31) in einem vorgegebenen Bereich liegt.

2. Schraubenspannvorrichtung nach Anspruch 1, **dadurch gekennzeichnet, dass** der Zugbolzen (20) eine axiale Gewindebohrung (23) zum Einschrauben des Gewindebolzens (31) aufweist, und dass die Gewindebohrung (23) an einem stirnseitigen Rand des Zugbolzens endet.

3. Schraubenspannvorrichtung nach Anspruch 1 oder 2, **dadurch gekennzeichnet, dass** die Tiefenmesseinrichtung (35) einen Messstab (36) aufweist, der in dem Kanal (37) des Zugbolzens (20) axial bewegbar ist und an einem Ende einen Anschlag (38) und am anderen Ende eine Markierung (40) aufweist, die aus einem Gehäuse (10) der Schraubenspannvorrichtung heraus vorstehen kann.

4. Schraubenspannvorrichtung nach Anspruch 3, **dadurch gekennzeichnet, dass** der Zugbolzen (20) eine Feder (42) enthält, die den Messstab (36) in Richtung auf das zweite Ende spannt.

5. Schraubenspannvorrichtung nach einem der Ansprüche 1 - 4, **dadurch gekennzeichnet, dass** die Tiefenmesseinrichtung (35) derart ausgebildet ist, dass sie eine Gutmarkierung (40) anzeigt, wenn das Ende (39) des Gewindebolzens (31) von der Anschlagfläche (24) einen Abstand hat, der mindestens gleich D ist, wobei D der Gewindedurchmesser des Gewindebolzens (31) ist.

## Claims

1. A screw tensioning device for stretching a threaded bolt (31) carrying a nut (32), said screw tensioning device comprising a support tube (12) and a cylinder member (15) provided in the axial extension of the support tube (12), said cylinder member surrounding an axially moveable piston section (17), and comprising a tensioning bolt (20) extending through the piston section (17) and arranged in engagement with the piston section so as to be axially entrained, the tensioning bolt (20) comprising an axial channel (37) provided with a depth measurement device (35) for indicating the axial position of the end (39) of the threaded bolt (31) relative to the tensioning bolt (20),
**characterized in that**
during the screw-mounting process of the screw tensioning device, the screw-in depth (ET) of the threaded bolt (31) can be measured automatically by means of the depth measuring device (35) and the depth measuring device emits an optical and/or acoustic signal when the screw-in depth (ET) of the threaded bolt (31) is in a predetermined range.

2. The screw tensioning device of claim 1, **characterized in that** the tensioning bolt (20) comprises an axial threaded bore (23) for screwing the threaded bolt (31) thereinto, and that the threaded bore (23) terminates at and end-side edge of the tensioning bolt.

3. The screw tensioning device of claim 1 or 2, **characterized in that** the depth measuring device (35) comprises a measurement rod (36) arranged to be axially movable in said channel (37) of the tensioning bolt (20), said measurement rod on one end thereof being provided with an abutment portion (38) and on the other end being provided with a marking (40) adapted to project from a casing (10) of the screw tensioning device.

4. The screw tensioning device of claim 3, **characterized in that** the tensioning bolt (20) is provided with a spring (42) biasing the measurement rod (36) toward said second end.

5. The screw tensioning device of any one of claims 1 - 4, **characterized in that** the depth measuring device (35) is configured to present an acceptance marking (40) when the end (39) of the threaded bolt (31) has a distance at least equal to D from the abutment face (24), D being the thread diameter of the threaded bolt (31).

## Revendications

1. Dispositif de serrage pour vis destiné à la dilatation d'un boulon fileté (31) supportant un écrou (32), avec un tube de soutien (12) et une pièce cylindrique (15) prévue dans une prolongation axiale du tube de soutien (12), laquelle pièce cylindrique (15) cerne une partie de piston (17) pouvant être déplacée de manière axiale, et avec également un boulon de traction (20) qui s'étend à travers la partie de piston (17) et qui se trouve en prise avec la partie de piston (17) en vue de l'entraînement axial, où le boulon de traction (20) présente un canal (37) axial, lequel présente un dispositif de mesure de la profondeur (35) en vue de l'affichage de la position axiale de l'extrémité (39) du boulon fileté (31) par rapport au boulon de traction (20),
**caractérisé en ce que**
lors du procédé de vissage du dispositif de serrage pour vis, la profondeur de vissage (ET) du boulon fileté (31) peut être mesuré automatiquement par moyen du dispositif de mesure de la profondeur (35) et le dispositif de mesure de la profondeur délivre un signal optique et/ou acoustique, lorsque la profondeur de vissage (ET) du boulon fileté (31) se situe dans une zone prédéterminée.

2. Dispositif de serrage pour vis selon la revendication 1, **caractérisé en ce que**
le boulon de traction (20) présente un alésage taraudé (23) axial destiné au vissage du boulon fileté (31) et **caractérisé en ce que** l'alésage taraudé (23) prend fin au niveau d'une bordure se trouvant sur le côté frontal du boulon de traction (20).

3. Dispositif de serrage pour vis selon la revendication 1 ou 2, **caractérisé en ce que** le dispositif de mesure de la profondeur (35) présente une tige de mesure (36) qui peut être déplacée de manière axiale dans le canal (37) du boulon de traction (20) et qui présente une butée (38) au niveau de l'une des extrémités, ainsi qu'un marquage (40) au niveau de l'autre extrémité, lequel marquage (40) peut faire saillie hors d'un boîtier (10) du dispositif de serrage pour vis.

4. Dispositif de serrage pour vis selon la revendication 3, **caractérisé en ce que**
le boulon de traction (20) comprend un ressort (42) qui serre la tige de mesure (36) dans la direction de la deuxième extrémité.

5. Dispositif de serrage pour vis selon l'une des revendications 1 à 4, **caractérisé en ce que** le dispositif de mesure de la profondeur (35) est conçu de telle sorte qu'il affiche un marquage des bonnes pièces (40) quand l'extrémité (39) du boulon fileté (31) présente un écartement, par rapport à la surface de la butée (24), qui est au moins égal à D, où D représente le diamètre du filetage du boulon fileté (31).
